# EUROPEAN PATENT SPECIFICATION

(11) **EP 4 126 500 B1**
(45) Date of publication and mention of the grant of the patent: **11.12.2024**
(21) Application number: 20933252.7
(22) Date of filing: 29.04.2020
(51) Int. Cl.: B29C 49/12, B29C 49/58, B29C 49/00, B29C 49/46, B29L 31/00, B65B 3/02

(54) **SEAL PIN FOR CONTAINER FORMING AND FILLING HEAD**
DICHTSTIFT FÜR EINEN BEHÄLTERFORMUNGS- UND -BEFÜLLUNGSKOPF
BROCHE D'ÉTANCHÉITÉ POUR TÊTE DE FORMAGE ET DE REMPLISSAGE DE RÉCIPIENT

(43) Date of publication of application: 08.02.2023
(73) Proprietor: LiquiForm Group LLC, Saline, MI 48176 (US)
(72) Inventor: CARPENTER, Gregory, Ann Arbor, Michigan 48103 (US); STEIH, Richard, Jackson, Michigan 49201 (US)
(74) Representative: Dr. Solf & Zapf Patent- und Rechtsanwalts PartG mbB
(86) International application number: PCT/US2020/030439
(87) International publication number: WO 2021/221628

(56) References cited:
- WO-A1-2019/230551
- US-A1- 2011 244 069
- US-A1- 2012 093 965
- US-A1- 2013 074 979
- US-A1- 2013 164 404
- US-A1- 2016 107 367
- US-A1- 2017 291 345
- US-A1- 2018 236 706
- US-A1- 2019 016 037

## Description

### FIELD

The present disclosure relates to a seal pin assembly for a forming and filling head configured to inject a product into a thermoplastic preform for simultaneously forming a container from the thermoplastic preform and filling the container with the product. Seal pin assemblies according to the prior art are described in Patent documents US2019/016037A1, US2013/074979A1, US2016/107367A1 and US2017/291345A1.

### BACKGROUND

This section provides background information related to the present disclosure, which is not necessarily prior art.

Polymeric containers are used to store various types of food and beverages. Such containers are typically formed from a preform using various processes. One such process involves simultaneously forming the container from a preform and filling the container with any suitable product. This process is commonly referred to as Liquiform^{®}. To simultaneously form and fill the container, a forming/filling head is placed into cooperation with a finish of the preform.

While current Liquiform^{®} heads are suitable for their intended use, they are subject to improvement. For example, flow through existing heads may become "sided" (i.e., non-conical), depending on how the liquid enters the head and how flow drags around the stretch rod. When forming high-density polyethylene containers, gates have been seen to drift off-center to a repeatable container side (with respect to the mold). Also, with existing Liquiform^{®} heads excessive material bubbling may occur during forming/filling, and shoulder areas of the container may not properly form. The present disclosure advantageously provides for an improved seal pin assembly that address these issues. One skilled in the art will appreciate that the present disclosure provides numerous additional advantages and unexpected results as well.

### SUMMARY

This section provides a general summary of the disclosure, and is not a comprehensive disclosure of its full scope or all of its features.

The present disclosure includes a seal pin assembly for a forming and filling head configured to inject a product into a thermoplastic preform for simultaneously forming a container from the thermoplastic preform and filling the container with the product. The seal pin assembly includes a seal pin movable within the forming and filling head towards and away from a nozzle of the forming and filling head. The nozzle is configured to cooperate with the thermoplastic preform. A vortex generating member is mounted to the seal pin and configured to convert a stream of the product into a vortex as the product flows across the vortex generating member and out through the nozzle.

The present disclosure further includes a method for simultaneously forming a container from a thermoplastic preform and filling the container with a product dispersed from a nozzle of a forming and filling head including a seal pin assembly. The method includes converting a stream of the product into a vortex by directing the stream of the product across a vortex generating member mounted to a seal pin of the seal pin assembly such that the product exits the nozzle and flows into the preform as a uniform, conical stream having a centrifugal motion.

Further areas of applicability will become apparent from the description provided herein. The description and specific examples in this summary are intended for purposes of illustration only and are not intended to limit the scope of the present disclosure.

### DRAWINGS

The drawings described herein are for illustrative purposes only of select embodiments and not all possible implementations, and are not intended to limit the scope of the present disclosure.
FIG. 1 is a cross-sectional view of seal pin assembly in accordance with the present disclosure including in a forming/filling head configured to inject product into a preform to simultaneously form a container from the preform and fill the container with the product;
FIG. 2 is a perspective view of FIG. 1;
FIG. 3A is a side view of a vortex generating member in accordance with the present disclosure configured to convert a stream of the product into a vortex as the product flows across the vortex generating member;
FIG. 3B is a perspective view of the vortex generating member of FIG. 3A; and
FIG. 3C is a top view of the vortex generating member of FIG. 3A.

Corresponding reference numerals indicate corresponding parts throughout the several views of the drawings.

### DETAILED DESCRIPTION

Example embodiments will now be described more fully with reference to the accompanying drawings.

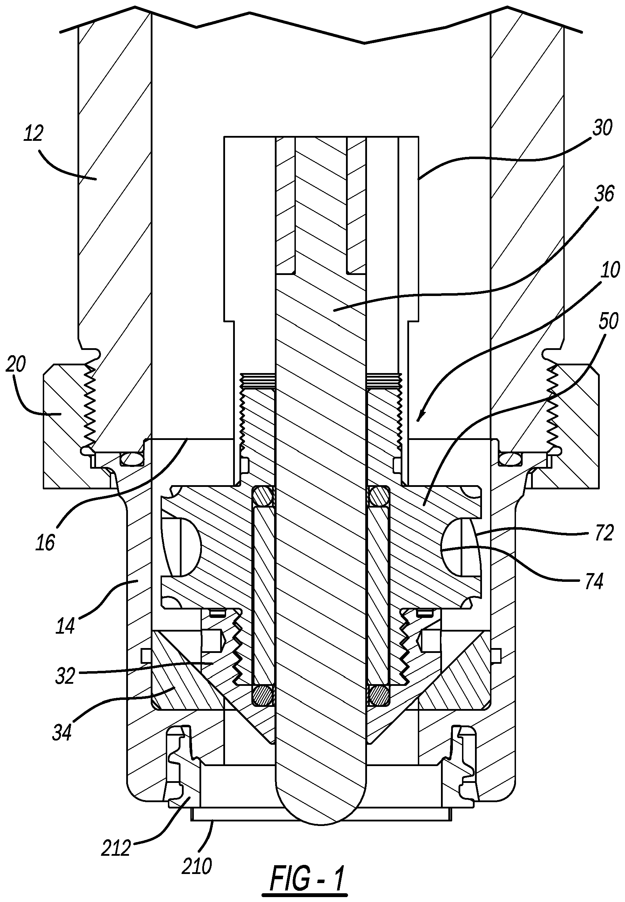

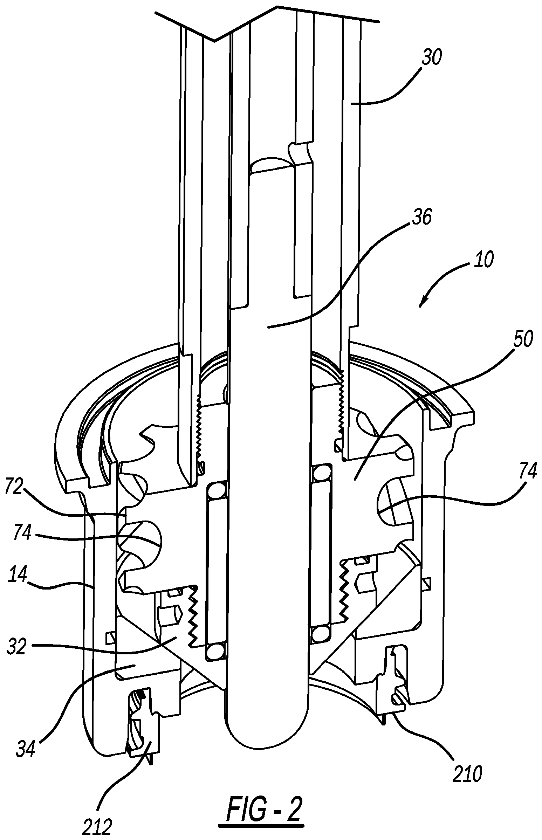

FIGS. 1 and 2 illustrate a seal pin assembly 10 in accordance with the present disclosure for use with any suitable machine head, such as forming and filling head 12 for simultaneously forming and filling a polymeric container from a container preform 210. The preform 210 and the resulting container can be formed of any suitable polymeric material, such as polyethylene terephthalate (PET), low-density polyethylene (LDPE), high-density polyethylene (HDPE), polypropylene (PP), polystyrene, and the like, for example. The forming and filling head 12 is configured for use with any suitable Liquiform^{®} machine, for example, such as described in the following United States Patents 7,914,726; 8,017,064; 8,435,026; and 8,573,964.

A nozzle 14 is secured to an outlet 16 of the forming and filling head 12 in any suitable manner, such as with a coupling member 20. With the nozzle 14 secured to the head 12, and a finish 212 of the preform 210 sealed to the nozzle 14, any suitable product can be injected from the head 12 into the preform 210 by way of the nozzle 14 to simultaneously form a container from the preform 210 and fill the container with the product. Suitable products include, but are not limited to, water, sports drinks, juice, sauces, any suitable foodstuffs, etc.

The seal pin assembly 10 generally includes a seal pin 30, which is moveable within the forming and filling head 12 to open and close the nozzle 14. In a closed position, a seal 32 of the seal pin assembly 10 contacts and seals against a nozzle seal 34 of the nozzle to prevent product from exiting the nozzle 14. In an open position, the seal 32 is spaced apart from the nozzle seal 34 to allow fluid to flow through the nozzle 14 and into the preform 210. To facilitate forming of the container, a stretch rod 36 may be extended through the seal 32 and the nozzle 14, and into the preform 210.

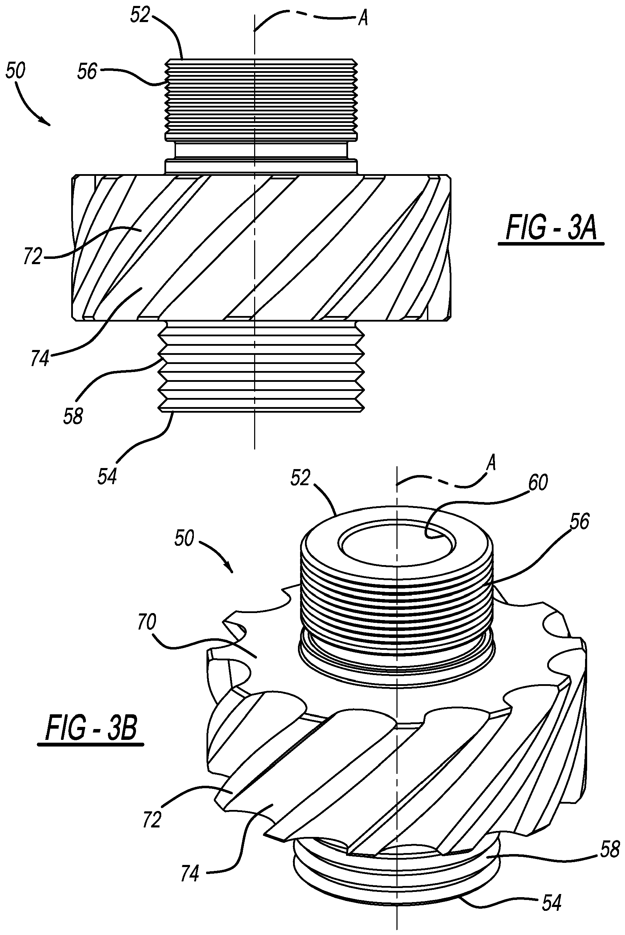

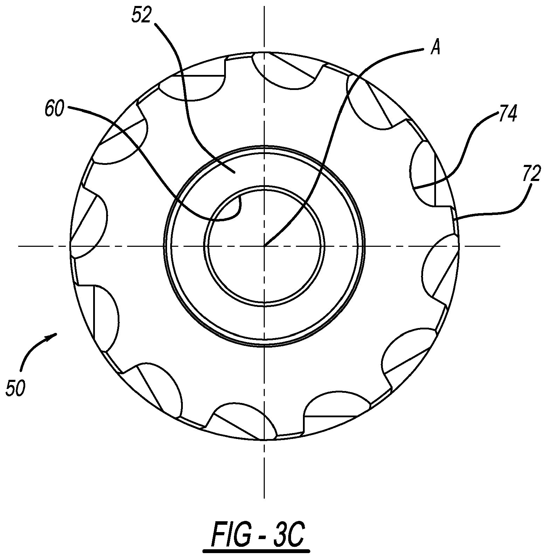

With continued reference to FIGS. 1 and 2, and additional reference to FIGS. 3A, 3B, and 3C, the seal pin assembly 10 further includes a vortex generating member 50, which may be coupled to a distal end of the seal pin 30. The seal 32 is coupled to the vortex generating member 50. The vortex generating member 50 generally includes a proximal end 52 and a distal end 54, which is opposite to the proximal end 52. At the proximal end 52 is an upper coupling 56, which may include any suitable coupling members configured to couple with the seal pin 30. In the example illustrated, the upper coupling 56 includes threads configured to cooperate with threads at a distal end of the seal pin 30. At the distal end 54 of the vortex generating member 50 is a lower coupling 58, which may be configured in any suitable manner to connect the seal 32 to the distal end 54. In the example illustrated, the lower coupling 58 includes a plurality of threads configured to cooperate with threads of the seal 32. The vortex generating member 50 defines a bore 60 extending through the vortex generating member 50 along an axis A thereof extending from the proximal end 52 to the distal end 54. The bore 60 is sized and shaped to accommodate the stretch rod 36.

The vortex generating member 50 further includes a body 70 between the upper coupling 56 and the lower coupling 58. The body 70 includes a plurality of vanes extending from an outer periphery of the body 70 away from the axis A. The vanes 72 define channels 74. Specifically, each one of the channels 74 is defined between vanes 72 that are directly adjacent to one another. The vanes 72 extend in a helical manner, and the channels 74 are helical channels. The vanes 72 extend outward to an inner surface of the nozzle 14 such that the vanes 72 abut, or nearly abut, the inner surface of the nozzle 14.

Product flowing through the filling head 12 and the nozzle 14 flows through the channels 74. Because the channels 74 are helical, a stream of the product is converted from a generally linearly flow into a vortex. As a result, the product exits the nozzle 14 as a uniform, conical stream having a centrifugal motion.

The centrifugal motion of the product advantageously generates a density gradient where bubbles of the product move towards a center of the container after the container has been formed from the preform 210. The bubbles coalesce, rise to a surface of the product, and disperse. As a result, a container formed and filled with product that has flowed through the channels 74 of the vortex generating member 50 will have fewer bubbles as compared to product filled with a filling head that does not include the vortex generating member 50. The bubbles quickly rise to the surface and disperse because, in part, there is little or no contact/adherence to a sidewall of the container and no isolation in suspension of the bubbles.

The vortex/centrifugal flow of product within the formed container continues for about 15-20 seconds post-formation of the container, at least with respect to products having a viscosity similar to water. During this time, the bubbles move from the sidewall of the container to the center of the container due to centrifugal forces creating a density gradient. As the vortex flow slows, the bubbles combine and rise to the surface of the product as a single mass. As a result, duration of the bubbles is less as compared to containers that are filled with filling heads that do not include the vortex generating member 50.

With respect to filling heads that do not include the vortex generating member 50, an aneurism often forms close to a gate, and a shoulder of the container is the last portion to form. In contrast, product that has passed through the helical channels 74 of the vortex generating member 50 is directed in the "hoop" direction after the product flows out of the nozzle 14 and into the preform 210. As a result, the aneurism is closer to the shoulder of the container, which results in improved formation of the shoulder as compared to containers that are formed/filled with filling heads that do not include the vortex generating member 50.

The foregoing description of the embodiments has been provided for purposes of illustration and description. It is not intended to be exhaustive or to limit the disclosure. Individual elements or features of a particular embodiment are generally not limited to that particular embodiment, but, where applicable, are interchangeable and can be used in a selected embodiment, even if not specifically shown or described. The same may also be varied in many ways. Such variations are not to be regarded as a departure from the disclosure, and all such modifications are intended to be included within the scope of the disclosure as defined in the appended claims.

## Claims

1. A seal pin assembly (10) for a forming and filling head (12) configured to inject a product into a thermoplastic preform (210) for simultaneously forming a container from the thermoplastic preform (210) and filling the container with the product, the seal pin assembly (10) comprising:
a seal pin (30) movable within the forming and filling head (12) towards and away from a nozzle (14) of the forming and filling head (12), the nozzle (14) configured to cooperate with the thermoplastic preform (210); and
a vortex generating member (50) comprising a proximal end (52) and a distal end (54), which is opposite to the proximal end (52), wherein the vortex generating member (50) is coupled to the seal pin (30) at the proximal end (52) and configured to convert a stream of the product into a vortex as the product flows across the vortex generating member (50) and out through the nozzle (14), the vortex generating member (50) defining a bore (60) extending through the vortex generating member (50) along an axis (A) thereof extending from the proximal end (52) to the distal end (54), wherein the bore (6) is sized and shaped to accommodate a stretch rod (36) therein; and
the seal pin assembly further comprises a seal (32) coupled to the vortex generating member (50) at the distal end (54) of the vortex generating member (50), the seal (32) configured to seal against the nozzle (14).

2. The seal pin assembly (10) of claim 1,
**characterized in that**
the vortex generating member (50) includes threads configured to cooperate with the seal pin (30) to connect the vortex generating member (50) to the seal pin (30).

3. The seal pin assembly (10) of claim 1 or 2,
**characterized in that**
the vortex generating member (50) includes a plurality of vanes (72) extending about an outer surface of the vortex generating member (50),
wherein preferably the plurality of vanes (72) define channels (74) therebetween through which the product flows.

4. The seal pin assembly (10) of claim 3,
**characterized in that**
the plurality of vanes (72) and the plurality of channels (74) are helical,
wherein preferably the plurality of channels (74) are configured such that product that flows through the plurality of channels (74) exits the nozzle (14) as a uniform, conical stream.

5. The seal pin assembly (10) of claim 4,
**characterized in that**
the plurality of channels (74) are configured such that product that flows through the plurality of channels (74) exits the nozzle (14) with a centrifugal motion.

6. The seal pin assembly of claim 5,
**characterized in that**
the plurality of channels (74) are configured such that as the product exits the nozzle (14) and flows into the container, centrifugal motion of the product generates a density gradient where bubbles of the product move towards a center of the container after the container has been formed from the preform (210), the bubbles coalesce, rise to a surface of the product, and disperse.

7. The seal pin assembly (10) of claim 5 or 6,
**characterized in that**
the plurality of channels (74) are configured such that as the product exits the nozzle (14) and flows into the container, an aneurism forms at a shoulder of the container.

8. A method for simultaneously forming a container from a thermoplastic preform (210) and filling the container with a product dispersed from a nozzle (14) of a forming and filling head (12) including a seal pin assembly (10) of one of the preceding claims, the method comprising:
converting a stream of the product into a vortex by directing the stream of the product across the vortex generating member (50) mounted to the seal pin (30) of the seal pin assembly (10) such that the product exits the nozzle (14) and flows into the preform (210) as a uniform, conical stream having a centrifugal motion.

9. The method of claim 8,
**characterized in that**
the product is directed through helical channels (74) of the vortex generating member (50) defined by helical vanes (72) of the vortex generating member (50).

10. The method of claim 8 or 9,
**characterized in that**
the method further comprises moving the stretch rod (36) through the bore (60) defined by the vortex generating member (50).

11. The method of one of claims 8 to 10,
**characterized in that**
the method further comprises moving the seal (32) of the seal pin assembly (10) into cooperation with a nozzle seal (34) of the nozzle (14) to prevent product from flowing out of the nozzle (14), and moving the seal (32) out of cooperation with the nozzle seal (34) to allow product to flow out of the nozzle (14) and into the preform (210).

12. The method of one of claims 8 to 11,
**characterized in that**
the method further comprises using the centrifugal motion of the product to generate a density gradient where bubbles of the product move towards a center of the container after the container has been formed from the preform (210), the bubbles coalesce, rise to a surface of the product, and disperse.

13. The method of one of claims 8 to 12,
**characterized in that**
the method further comprises forming an aneurism at a shoulder of the container.

## Patentansprüche

1. Dichtungsstiftanordnung (10) für einen Form- und Füllkopf (12), der so konfiguriert ist, dass er ein Produkt in einen thermoplastischen Vorformling (210) einspritzt, um gleichzeitig einen Behälter aus dem thermoplastischen Vorformling (210) zu formen und den Behälter mit dem Produkt zu füllen, wobei die Dichtungsstiftanordnung (10) umfasst:
einen Dichtungsstift (30), der innerhalb des Form- und Füllkopfes (12) zu einer Düse (14) des Form- und Füllkopfes (12) hin und von dieser weg bewegbar ist, wobei die Düse (14) so konfiguriert ist, dass sie mit dem thermoplastischen Vorformling (210) zusammenwirkt; und
ein wirbelerzeugendes Element (50) mit einem proximalen Ende (52) und einem distalen Ende (54), welches dem proximalen Ende (52) gegenüberliegt, wobei das wirbelerzeugende Element (50) mit dem Dichtungsstift (30) am proximalen Ende (52) gekoppelt und so konfiguriert ist, dass es einen Strom des Produkts in einen Wirbel umwandelt, wenn das Produkt durch das wirbelerzeugende Element (50) und nach außen durch die Düse (14) fließt, wobei das wirbelerzeugende Element (50) eine Bohrung (60) definiert, die sich durch das wirbelerzeugende Element (50) entlang einer Achse (A) desselben erstreckt, die sich von dem proximalen Ende (52) zu dem distalen Ende (54) erstreckt, wobei die Bohrung (6) so bemessen und geformt ist, dass sie einen Streckstab (36) darin aufnehmen kann; und
wobei die Dichtungsstiftanordnung ferner eine Dichtung (32) umfasst, die mit dem Wirbelerzeugungselement (50) am distalen Ende (54) des Wirbelerzeugungselements (50) verbunden ist, wobei die Dichtung (32) so konfiguriert ist, dass sie gegen die Düse (14) abdichtet.

2. Dichtungsstiftanordnung (10) nach Anspruch 1,
**dadurch gekennzeichnet, dass**
das wirbelerzeugende Element (50) Gewinde aufweist, die so konfiguriert sind, dass sie mit dem Dichtungsstift (30) zusammenwirken, um das wirbelerzeugende Element (50) mit dem Dichtungsstift (30) zu verbinden.

3. Dichtungsstiftanordnung (10) nach Anspruch 1 oder 2,
**dadurch gekennzeichnet, dass**
das wirbelerzeugende Element (50) eine Vielzahl von Flügeln (72) umfasst, die sich um eine Außenfläche des wirbelerzeugenden Elements (50) erstrecken,
wobei vorzugsweise die Vielzahl von Schaufeln (72) zwischen sich Kanäle (74) bilden, durch die das Produkt fließt.

4. Dichtungsstiftanordnung (10) nach Anspruch 3,
**dadurch gekennzeichnet, dass**
die Mehrzahl der Schaufeln (72) und die Mehrzahl der Kanäle (74) schraubenförmig sind,
wobei vorzugsweise die Vielzahl von Kanälen (74) so konfiguriert sind, dass Produkt, das durch die Vielzahl von Kanälen (74) fließt, die Düse (14) als ein gleichmäßiger, konischer Strom verlässt.

5. Dichtungsstiftanordnung (10) nach Anspruch 4,
**dadurch gekennzeichnet, dass**
die Vielzahl von Kanälen (74) so konfiguriert sind, dass Produkt, das durch die Vielzahl von Kanälen (74) fließt, die Düse (14) mit einer Zentrifugalbewegung verlässt.

6. Dichtungsstiftanordnung nach Anspruch 5,
**dadurch gekennzeichnet, dass**
die Vielzahl von Kanälen (74) so konfiguriert sind, dass, wenn das Produkt aus der Düse (14) austritt und in den Behälter fließt, die Zentrifugalbewegung des Produkts einen Dichtegradienten erzeugt, bei dem sich Blasen des Produkts in Richtung eines Zentrums des Behälters bewegen, nachdem der Behälter aus dem Vorformling (210) gebildet wurde, die Blasen koaleszieren, zu einer Oberfläche des Produkts aufsteigen und dispergieren.

7. Dichtungsstiftanordnung (10) nach Anspruch 5 oder 6,
**dadurch gekennzeichnet, dass**
die Vielzahl von Kanälen (74) so konfiguriert sind, dass sich beim Austritt des Produkts aus der Düse (14) und beim Einfließen in den Behälter ein Aneurysma an einer Schulter des Behälters bildet.

8. Verfahren zum gleichzeitigen Formen eines Behälters aus einem thermoplastischen Vorformling (210) und Füllen des Behälters mit einem Produkt, das aus einer Düse (14) eines Form- und Füllkopfes (12) dispergiert wird, der eine Dichtungsstiftanordnung (10) nach einem der vorhergehenden Ansprüche enthält, wobei das Verfahren umfasst:
Umwandeln eines Stroms des Produkts in einen Wirbel durch Lenken des Stroms des Produkts über das wirbelerzeugende Element (50), das an dem Dichtungsstift (30) der Dichtungsstiftanordnung (10) angebracht ist, so dass das Produkt aus der Düse (14) austritt und in den Vorformling (210) als ein gleichmäßiger, konischer Strom mit einer Zentrifugalbewegung fließt.

9. Verfahren nach Anspruch 8,
**dadurch gekennzeichnet, dass**
das Produkt durch schraubenförmige Kanäle (74) des wirbelerzeugenden Elements (50) geleitet wird, die durch schraubenförmige Schaufeln (72) des wirbelerzeugenden Elements (50) definiert sind.

10. Verfahren nach Anspruch 8 oder 9,
**dadurch gekennzeichnet, dass**
das Verfahren ferner das Bewegen der Streckstange (36) durch die von dem wirbelerzeugenden Element (50) definierte Bohrung (60) umfasst.

11. Verfahren nach einem der Ansprüche 8 bis 10,
**dadurch gekennzeichnet, dass**
das Verfahren ferner das Bewegen der Dichtung (32) der Dichtungsstiftanordnung (10) in Zusammenwirkung mit einer Düsendichtung (34) der Düse (14) umfasst, um das Produkt am Herausfließen aus der Düse (14) zu hindern, und das Bewegen der Dichtung (32) aus der Zusammenwirkung mit der Düsendichtung (34) heraus, um dem Produkt zu ermöglichen, aus der Düse (14) heraus und in den Vorformling (210) hinein zu fließen.

12. Verfahren nach einem der Ansprüche 8 bis 11,
**dadurch gekennzeichnet, dass**
das Verfahren ferner die Verwendung der Zentrifugalbewegung des Produkts umfasst, um einen Dichtegradienten zu erzeugen, bei dem sich Blasen des Produkts in Richtung eines Zentrums des Behälters bewegen, nachdem der Behälter aus dem Vorformling (210) gebildet wurde, die Blasen koaleszieren, zu einer Oberfläche des Produkts aufsteigen und dispergieren.

13. Verfahren nach einem der Ansprüche 8 bis 12,
**dadurch gekennzeichnet, dass**
das Verfahren ferner die Bildung eines Aneurysmas an einer Schulter des Behälters umfasst.

## Revendications

1. Assemblage de goupille d'étanchéité (10) pour une tête de formage et de remplissage (12) configurée pour injecter un produit dans une préforme thermoplastique (210) afin de former simultanément un récipient à partir de la préforme thermoplastique (210) et de remplir le récipient avec le produit, l'assemblage de goupille d'étanchéité (10) comprenant:
une groupille d'étanchéité (30) mobile à l'intérieur de la tête de formage et de remplissage (12) en direction et à l'écart d'une buse (14) de la tête de formage et de remplissage (12), la buse (14) étant configurée pour coopérer avec la préforme thermoplastique (210); et
un élément générateur de tourbillon (50) comprenant une extrémité proximale (52) et une extrémité distale (54), opposée à l'extrémité proximale (52), dans lequel l'élément générateur de tourbillon (50) est couplé à la groupille d'étanchéité (30) à l'extrémité proximale (52) et configuré pour convertir un flux de produit en un tourbillon lorsque le produit s'écoule à travers l'élément générateur de tourbillon (50) et sort par la buse (14), l'élément générateur de tourbillons (50) définissant un perçage (60) s'étendant à travers l'élément générateur de tourbillons (50) le long d'un axe (A) s'étendant de l'extrémité proximale (52) à l'extrémité distale (54), dans lequel le perçage (6) est dimensionné et formé pour accueillir une tige d'étirement (36) à l'intérieur; et
l'assemblage de goupille d'étanchéité comprend en outre un joint d'étanchéité (32) couplé à l'élément générateur de tourbillon (50) à l'extrémité distale (54) de l'élément générateur de tourbillon (50), le joint d'étanchéité (32) étant configuré pour assurer l'étanchéité contre la buse (14).

2. L'assemblage de groupille d'étanchéité (10) de la revendication 1,
**caractérisé en ce que**
l'élément générateur de tourbillons (50) comprend des filets configurés pour coopérer avec la groupille d'étanchéité (30) afin de connecter l'élément générateur de tourbillons (50) à la groupille d'étanchéité (30).

3. L'assemblage de groupille d'étanchéité (10) de la revendication 1 ou 2,
**caractérisé en ce que**
l'élément générateur de tourbillons (50) comprend une pluralité d'ailettes (72) s'étendant autour d'une surface extérieure de l'élément générateur de tourbillons (50),
dans lequel, de préférence, la pluralité d'ailettes (72) définit des canaux (74) entre elles-mêmes à travers lesquels le produit s'écoule.

4. L'assemblage de groupille d'étanchéité (10) de la revendication 3,
**caractérisé en ce que**
la pluralité d'ailettes (72) et la pluralité de canaux (74) sont hélicoïdaux,
où, de préférence, la pluralité de canaux (74) est configurée de manière à ce que le produit qui s'écoule à travers la pluralité de canaux (74) sorte de la buse (14) sous la forme d'un flux uniforme et conique.

5. L'assemblage de groupille d'étanchéité (10) de la revendication 4,
**caractérisé en ce que**
la pluralité de canaux (74) est configurée de telle sorte que le produit qui s'écoule à travers la pluralité de canaux (74) sort de la buse (14) avec un mouvement centrifuge.

6. L'assemblage de groupille d'étanchéité de la revendication 5,
**caractérisé en ce que**
la pluralité de canaux (74) est configurée de telle sorte que lorsque le produit sort de la buse (14) et s'écoule dans le récipient, le mouvement centrifuge du produit génère un gradient de densité où les bulles du produit se déplacent vers un centre du récipient après que le récipient a été formé à partir de la préforme (210), les bulles coalescent, montent à la surface du produit et se dispersent.

7. L'assemblage de groupille d'étanchéité (10) de la revendication 5 ou 6,
**caractérisé en ce que**
la pluralité de canaux (74) est configurée de telle sorte que lorsque le produit sort de la buse (14) et s'écoule dans le récipient, un anévrisme se forme au niveau d'une épaule du récipient.

8. Procédé pour former simultanément un récipient à partir d'une préforme thermoplastique (210) et remplir le récipient avec un produit dispersé à partir d'une buse (14) d'une tête de formage et de remplissage (12) comprenant un assemblage de goupille d'étanchéité (10) de l'une des revendications précédentes, le procédé comprenant:
convertir un flux de produit en un tourbillon en dirigeant le flux de produit à travers l'élément générateur de tourbillon (50) monté sur la groupille d'étanchéité (30) de l'assemblage de groupille d'étanchéité (10) de sorte que le produit sorte de la buse (14) et s'écoule dans la préforme (210) sous la forme d'un flux uniforme et conique ayant un mouvement centrifuge.

9. Le procédé de la revendication 8,
**caractérisé en ce que**
le produit est dirigé à travers des canaux hélicoïdaux (74) de l'élément générateur de tourbillons (50) définis par des ailettes hélicoïdales (72) de l'élément générateur de tourbillons (50).

10. Le procédé de la revendication 8 ou 9,
**caractérisé en ce que**
le procédé comprend en outre le déplacement de la tige d'étirement (36) à travers le perçage (60) défini par l'élément générateur de tourbillons (50).

11. Le procédé de l'une des revendications 8 à 10,
**caractérisé en ce que**
le procédé comprend en outre faire coopérer le joint d'étanchéité (32) de l'assemblage de groupille d'étanchéité (10) avec un joint d'étanchéité de buse (34) de la buse (14) pour empêcher le produit de s'écouler hors de la buse (14), et mouver le joint d'étanchéité (32) hors coopération avec le joint d'étanchéité de buse (34) pour permettre au produit de s'écouler hors de la buse (14) et de pénétrer dans la préforme (210).

12. Le procédé de l'une des revendications 8 à 11,
**caractérisé en ce que**
le proceed comprend en outre utiliser le mouvement centrifuge du produit pour générer un gradient de densité où les bulles du produit se déplacent vers un centre du récipient après que celui-ci a été formé à partir de la préforme (210), les bulles coalescent, montent à la surface du produit et se dispersent.

13. Le procédé de l'une des revendications 8 à 12,
**caractérisé en ce que**
le proceed comprend en outre former un anévrisme au niveau d'une épaule du récipient.
